# EUROPEAN PATENT APPLICATION

(11) **EP 1 156 230 A2**
(43) Date of publication of application: **21.11.2001**
(21) Application number: 01111653.0
(22) Date of filing: 14.05.2001
(51) Int. Cl.: F16D 65/12

(54) **Motor vehicle brake with improved heat dissipation**

(30) Priority: 16.05.2000 IT MI000300 U
(71) Applicant: Braking International S.R.L., 20048 Carate Brianza (MI) (IT)
(72) Inventor: Greppi, Bruno, 20030 Seveso (MI) (IT); Perego, Anna, 20052 Monza (MI) (IT)
(74) Representative: Cicogna, Franco

(57) **Abstract**

The present invention relates to an improved heat-dissipation braking assembly for motor-vehicle, motor-cycle and the like wheels. The assembly comprises at least a braking disc (1) including braking disc portions intimately contacting the wheel rim (2), for optimizing the transmission of heat by conduction from the disc to the wheel rim, braking calipers (10) being moreover provided for affecting the braking disc.

## Description

### BACKGROUND OF THE INVENTION

The present invention relates to a braking assembly including means for improving the braking heat dissipation, which braking assembly has been specifically designed for application to motor-vehicle, motor-cycle and the like wheels.

As is known, prior disc braking assembly conventionally comprise a braking disc, which is coupled to the hub of the wheel and which is affected by the braking calipers.

During the braking operations, as is further well known, a great amount of heat is generated, which must be properly dissipated.

In prior braking systems, the generated braking heat is dissipated mainly by ventilating and radiating, thereby the brake discs must be constructed with a comparatively large mass.

In fact, if the brake discs would be constructed with a small mass, they would be deformed during the braking operation, because of the evolved braking heat.

The above mentioned solutions require very complex heat dissipating means, in order to improve the dissipation of the braking heat from the brake disc to the outside, for preventing the brake disc to be undesirably deformed.

### SUMMARY OF THE INVENTION

Accordingly, the aim of the present invention is to overcome the above mentioned drawbacks, by providing a braking assembly including means for improving the braking heat dissipation, and specifically designed for application to motor-vehicle, motor-cycle and the like wheels, allowing to greatly improve the transmission of the braking heat by conduction, with the advantage of using brake discs of less weight, subjecting the vehicle construction to less stress forces.

Within the scope of the above mentioned aim, a main object of the present invention is to provide such a braking assembly which, in addition to improving the braking heat transmission to the outside, allows to improve the braking operation, while reducing the involved braking masses.

Another object of the present invention is to provide such a braking assembly which, owing to its specifically designed construction features, is very reliable and safe in operation.

According to one aspect of the present invention, the above mentioned aim and objects, as well as yet other objects, which will become more apparent hereinafter, are achieved by a braking assembly, including means for improving the dissipation of the braking heat, specifically designed for application to motor-vehicle, motor-cycle and the like wheels, characterized in that said braking assembly comprises at least a brake disc including brake disc portions intimately contacting the wheel rim, to optimize the dissipation of the braking heat from the brake disc to the wheel rim.

Braking calipers affecting the brake disc are moreover provided.

### BRIEF DESCRIPTION OF THE DRAWINGS

Further characteristics and advantages of the present invention will become more apparent hereinafter from the following detailed disclosure of a braking assembly, including means for improving the braking heat dissipation, specifically designed for application to motor-vehicle, motor-cycle and the like wheels, and being illustrated, by way of an indicative, but not limitative, example in the figures of the accompanying drawings, where:
Figure 1 is a front view illustrating the braking assembly according to the invention applied to a wheel to be braked;
Figure 2 is a diametrical cross-sectional view illustrating the braking assembly according to the present invention, applied to a wheel to be braked thereby; and
Figure 3 is a detail view illustrating, on an enlarged scale, a detail for coupling the braking disc to the wheel rim.

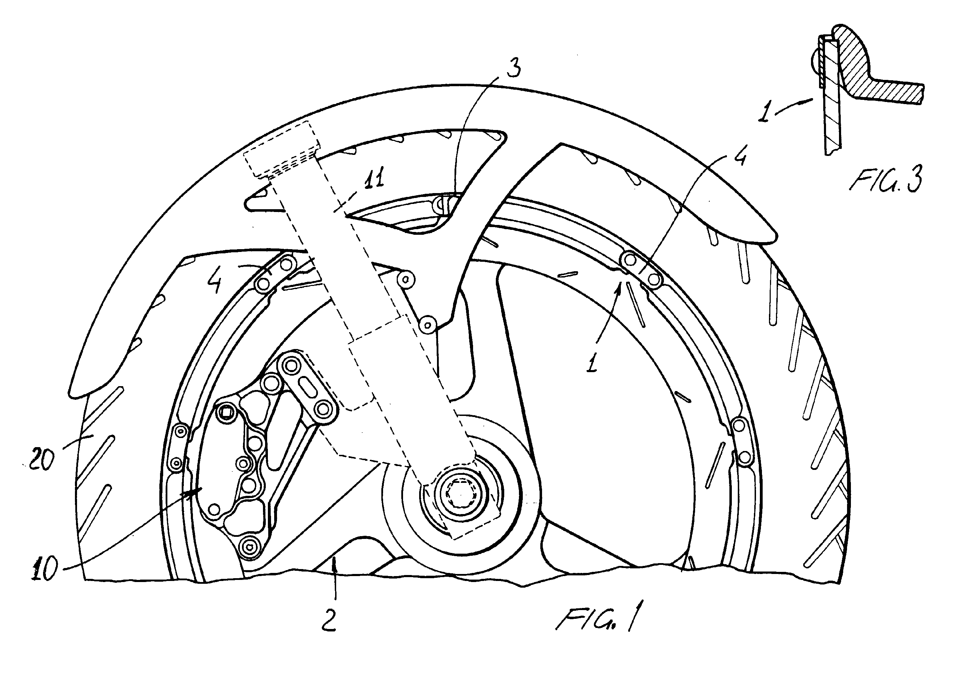

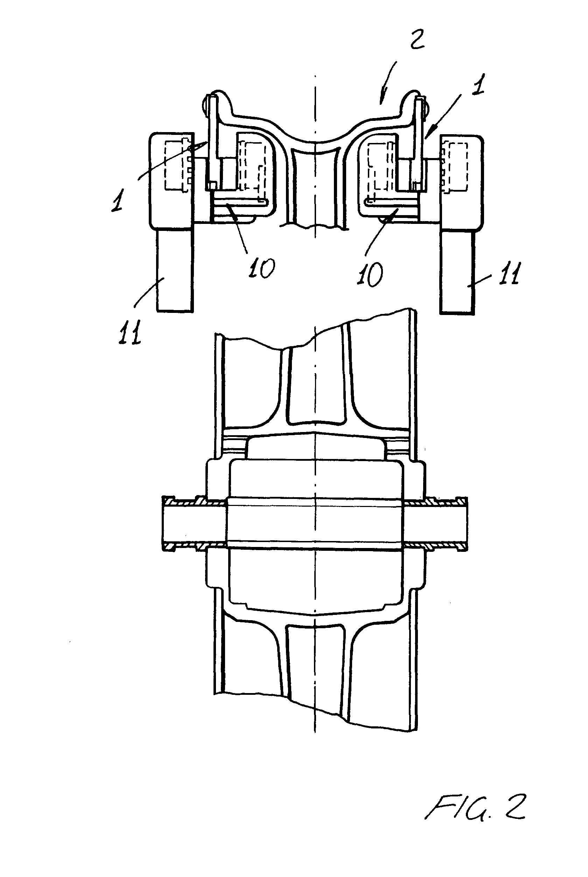

### DESCRIPTION OF THE PREFERRED EMBODIMENT

With reference to the number references of the above mentioned figures, the braking assembly, including means for improving the dissipation of the braking heat, specifically designed for application to motor-vehicle, motor-cycle and the like wheels, according to the present invention, comprises a brake or braking disc, generally indicated by the reference number 1, which has advantageously a ring gear configuration, and is arranged near the outer peripheral portion of the wheel rim, generally indicated by the reference number 2.

The brake or braking disc which, in the shown exemplary embodiment is applied to a motor-cycle wheel rim, on both faces of said wheel rim, is so arranged as to be included inside said wheel rim 2.

The brake disc comprises a plurality of radially extending lugs 3, nested under a plurality of fixing bridge elements 4, for providing a connection to the wheel rim, thereby further providing an intimate contact between the brake disc and the wheel rim.

Thus, the overall mass of the wheel rim, absorbing by conduction the braking heat from the brake disc, will properly dissipate the braking heat to the outside environment.

The coupling, by the mentioned bridging elements 4, allows to hold a radial thermal dilatation for the brake disc thereby, under in a heating event, the brake disc would not be undesirably deformed.

The brake discs 1 are affected by the braking calipers 10, of a per se known type and which, in the case of a motor-cycle, as in the illustrated embodiment, are coupled to the arm elements 11 of the motor-cycle fork assembly.

With the disclosed arrangement, the brake disc, which is practically arranged on the outer band of the wheel rim 2 inside the region thereof affected by the tyre 20, will have a less distance from the longitudinal axis of the wheel, and, accordingly of the motor-cycle, with the advantage of greatly reducing the side outer masses, thereby providing better driving capabilities.

From the above disclosure it should be apparent that the invention fully achieves the intended aim and objects.

In particular, the invention provides the advantage of using less mass brake discs which, having a greater diameter, greatly facilitate the braking operation.

In particular, the braking operation, which occurs in a correspondingly broader region, is much more even and progressive.

Another important feature of the invention is that the intimate contact between the brake disc and wheel rim provides a comparatively large mass which assures an improved braking heat dissipation, thereby allowing to optimize both the braking operation and the making of the brake discs.

In practicing the invention, the used materials, provided they are compatible to the intended use, as well as the contingent size and shapes, can be any, depending on requirements.

## Claims

1. A braking assembly including means for improving a dissipation of a braking heat, for application to motor- vehicle and motor-cycle wheels, **characterized in that** said braking assembly comprises at least a brake disc, including brake disc portions intimately contacting a wheel rim, to optimize a braking heat transmission by conduction from said brake disc to said wheel rim, braking calipers being moreover provided for affecting said brake disc.

2. A braking assembly, according to Claim 1, **characterized in that** said brake disc has a ring configuration.

3. A braking assembly, according to Claim 1, **characterized in that** said brake disc is arranged inside said wheel rim.

4. A braking assembly, according to Claim 1, **characterized in that** said brake disc is arranged near an outer peripheral portion of said wheel rim.

5. A braking assembly, according to Claim 1,
**characterized in that** said brake disc comprises a plurality of radially extending lugs which can be inserted under fixing bridging elements for coupling said brake disc to said wheel rim, said fixing bridging element intimately coupling said brake disc to said wheel rim while allowing said brake disc to perform a sliding movement under a thermal dilatation stress.

6. A braking assembly, according to Claim 1, **characterized in that** said braking assembly comprises a brake disc on each face of said wheel rim.

7. A braking assembly, according to Claim 1, **characterized in that** said brake disc has an enlarged braking surface and a reduced braking mass.
